# EUROPÄISCHE PATENTSCHRIFT

(11) **EP 2 823 196 B1**
(45) Veröffentlichungstag und Bekanntmachung des Hinweises auf die Patenterteilung: **10.01.2018**
(21) Anmeldenummer: 13709848.9
(22) Anmeldetag: 07.03.2013
(51) Int. Cl.: F16F 1/12

(54) **FEDERHÜLSE UND FEDERSTIFT**
SPRING SLEEVE AND SPRING PIN
DOUILLE ÉLASTIQUE ET TENON À RESSORT

(30) Priorität: 07.03.2012 DE 102012101929
(43) Veröffentlichungstag der Anmeldung: 14.01.2015
(73) Patentinhaber: Federnfabrik Dietz GmbH, 96465 Neustadt (DE)
(72) Erfinder: KRAMSS, Stephan, 96524 Föritz OT Oerlsdorf (DE)
(74) Vertreter: Pröll, Jürgen
(86) Internationale Anmeldenummer: PCT/EP2013/054590
(87) Internationale Veröffentlichungsnummer: WO 2013/132002

(56) Entgegenhaltungen:
- EP-A1- 1 191 247
- WO-A1-2005/075744
- DE-A1-102007 003 782
- FR-A1- 2 460 649
- GB-A- 192 578

## Beschreibung

Die vorliegende Erfindung betrifft eine Federhülse oder einen Federstift, bestehend aus einer Schraubenfeder und mindestens einer an einem Ende der Schraubenfeder aufgesteckten Hülse mit einem geschlossenen Kopf, wobei die Schraubenfeder aus der Hülse hervorsteht, oder mindestens einem an einem Ende der Schraubenfeder eingesteckten Stift mit einem Kopf, wobei der Kopf des Stiftes die Schraubenfeder übersteht.

Um derartige Federhülsen herzustellen, werden bisher Schraubenfedern in Hülsen aus Metall gesteckt. Anschließend wird die Hülse derart punktuell verformt, dass die Schraubenfeder innerhalb der Hülse gehalten wird. Dies wird beispielsweise durch Prägen erreicht, wobei an einer Seite der Hülse ein Prägestift in die Hülsenwand gedrückt wird, wodurch ein geprägter Wandvorsprung zwischen einer Wendel der Schraubenfeder gedrückt wird und diese innerhalb der Hülse fixiert. Bei Federstiften werden Schraubenfedern auf einen Stiftschaft selbstklemmend aufgeschraubt oder aufgeschoben, wobei die Schraubenfeder von dem Schaft gehalten wird. Derartige Federhülsen und Federstifte sind auch als Stößelfedern, Rastelemente (z.B. Raststifte) und Hemmteile bekannt und werden in einer Vielzahl von Anwendungen und Einrichtungen verwendet.

Jedoch weisen derartige Federhülsen oder Federstifte Nachteile auf. Zum Beispiel stehen die Federn aus den Federhülsen aufgrund des Prägens unterschiedlich weit hervor oder stehen unterschiedlich weit von dem Stift ab. Durch das Prägen der Hülse bzw. das Klemmen der Schraubenfedern in den Hülsen und/oder an den Stiften ändern sich auch die Federcharakteristiken der eingesetzten/ aufgesetzten Federn. Jedoch ist es gerade erwünscht, dass die Federn bei einer Vielzahl von Federhülsen oder Federstiften immer gleich weit aus der Hülse hervor- oder von dem Stift abstehen und die Federcharakteristiken der Schraubenfedern stets gleich bleiben. Gleichbleibende Federcharakteristiken bedeutet auch, dass die eingesetzten Schraubenfedern nach der Montage bzw. dem Zusammenfügen der Schraubenfedern mit der Hülse oder dem Stift die gleichen Werte aufweisen wie vor dem Zusammenfügen. Dieses kann jedoch beim Verklemmen der Schraubenfedern mit der Hülse oder dem Stift nicht gewährleistet werden. Die Deformation der Schraubenfeder bei der Verbindung dieser mit einer Hülse oder einem Stift ändert die Federcharakteristik der Schraubenfedern nachhaltig.

Aus der WO 92/12358 ist eine Federhülse, bestehend aus einer Schraubenfeder und mindestens einem an einem Ende der Schraubenfeder aufgesteckten Tragelement, bekannt, das eine kragenartige Ausnehmung zur Aufnahme des Endes der Schraubendfeder aufweist. Die Schraubenfeder ist an der Innenwand des Trageelementes angelötet.

Des Weiteren ist aus der AT 10 802 U1 ein Kältemittelverdichter bekannt, in dessen Gehäuse eine Antriebseinheit vorgesehen ist, welche mittels einer beliebigen Anzahl von Federelementen an einem vorzugsweise am Gehäuseboden angeordneten Lagerungsbereich des Gehäuses gelagert ist. Ein erster Endbereich eines jeden Federelementes ist an einem zapfenförmig ausgebildeten Lagerungselement an der Antriebseinheit formschlüssig aufgesteckt. Der zweite Endbereich des Federelementes ist auf ein am Gehäuse angeordnetes zapfenförmig ausgebildetes unteres Lagerelement aufgesteckt und formschlüssig daran gehalten. Die FR 2 460 649 offenbart eine Schraubenfeder, die während der Montage mit einem Endstück aus Kunststoff verschraubt wird. Es ist allgemein bekannt, in Werkstücken oder in Werkzeugen durch Induktion Wärme zu erzeugen. Hierzu kommt ein Induktor bei Induktionsgeräten als Überträger des Stromes aus dem Induktionsheizgerät in das Werkstück zum Einsatz.

Induktoren können in den verschiedensten Formen eingesetzt werden, z. B. als Flachspulen, als Zylinderspulen, als einzelne Windungen, usw. Die Form des Induktors muss dem zu wärmenden Werkstück angepasst werden, damit eine optimale Effizienz bei der Induktionserwärmung erreicht werden kann. Der Induktor ist in der Induktionsanlage höchsten elektrischen, thermischen und mechanischen Beanspruchungen ausgesetzt. In ihm läuft die Energieübertragung auf das Erwärmungsgut ab. Da die Induktionserwärmung auf der Basis leistungsstarker Magnetfelder arbeitet, muss die Spule von hohen Wechselströmen durchflossen werden. Die dabei auftretende Stromdichte erfordert eine sehr gute Kühlung. Die Induktorspulen sind in der Regel Kupferhohlprofile, die von Kühlwasser in der Abkühlungsphase durchströmt werden. Im Inneren des Induktors befindet sich das hocherhitzte Erwärmungsgut, z. B. in einem Schmelzofen aus Stahl mit einer Temperatur von ca. 1.600°. Um einen metallischen Körper in Kunststoff eindrücken zu können, sind ferner Flächenwandler als Induktoren bekannt, die einen Keramikdruckstempel mit Kühlluftbohrungen aufweisen. Solche Wandler werden auf das Insert aufgesetzt. Nach dem Erwärmen des Inserts und damit des Erwärmens des diesen mindestens teilweise umgebenden Kunststoffs kann dann unter Druck das Insert eingedrückt werden. Nach Ablauf der Haltezeit fährt der Flächenwandler dann wieder in seine Ursprungslage zurück, so dass eine neue Bestückung für einen neuen Verbindungsvorgang durchgeführt werden kann. Ein solcher in der Regel zylinderförmig ausgeführter Flächenwandler wird von einem Generator mit Ausgangsfrequenzen von ca.50 kHz bis ca. 450 kHz angesteuert, wobei die Stromstärken z. B. zwischen 12,5 A und 25 A eingestellt sein können. Die Leistungsaufnahme beträgt zwischen 1.800 W bis 3.600 W. Bei anderen Anwendungen sind die Generatoren und die Induktoren entsprechend zu dimensionieren. Die Bearbeitungszeiten betragen beim Insert-Verschweißen nur wenige Sekunden, beispielsweise 3 bis 4 Sekunden. Danach folgt eine Kühlzeit. Auch hier können die Induktoren Spulen aufweisen, die nach dem Heizungsprozess wieder abgekühlt werden. Flächeninduktoren werden beispielsweise auch dafür verwendet, um Kunststoffplatten, die zwischen einer Induktur- und einer Gegenplatte eingefügt sind, zu erhitzen und um sie beispielsweise mit einer anderen Platte zu verbinden.

Der Erfindung liegt die Aufgabe zugrunde, eine Federhülse und einen Federstift anzugeben, welche einfach herzustellen sind und welche im zusammengebauten Zustand für eine Vielzahl von Federstiften oder Federhülsen stets gleich lange und gleichbleibende Federabschnitte aufweisen, die aus der Hülse hervorstehen oder von dem Stift abstehen. Beim Zusammenfügen soll die Feder unbelastet bleiben, damit kein negativer Einfluss auf die Federcharakteristik der Schraubenfedern ausgeübt wird. Zudem sollen die Federhülse und der Federstift einfach und schnell herzustellen sein.

Die Aufgabe löst die Erfindung durch Ausgestaltung der Federhülse oder des Federstiftes gemäß der im Anspruch 1 angegebenen technischen Lehre.

Vorteilhafte Weiterbildungen der Erfindung erschließen sich aus den abhängigen Ansprüchen 2 bis 6.

Ein Verfahren zur Herstellung einer erfindungsgemäßen Federhülse oder eines Federstiftes ist im Anspruch 7 wiedergegeben, vorteilhafte Weiterbildungen des Verfahrens in den Ansprüchen 8 und 9.

Des Weiteren sind Vorrichtungen zum Herstellen einer Federhülse oder eines Federstiftes nach der Erfindung in den nebengeordneten Ansprüchen 10 und 11 angegeben.

Bei einer Federhülse oder einem Federstift, bestehend aus einer Schraubenfeder und mindestens einer an einem Ende der Schraubenfeder aufgesteckten Hülse mit einem geschlossenen Kopf, ist nach der Erfindung vorgesehen, dass die Schraubenfeder aus der Hülse hervorsteht oder mindestens an einem Ende der Schraubenfeder ein eingesteckter Stift mit einem Kopf vorgesehen ist, wobei der Kopf des Stiftes die Schraubenfeder übersteht. Die Hülse oder der Stift bestehen erfindungsgemäß aus thermoplastischem Kunststoff und die Hülse oder der Stift sind mittels Induktionsschweißen mit der metallenen Schraubenfeder verbunden.

Die Erfindung bedient sich eines an sich bekannten Induktionsschweißverfahrens, wobei durch das hohe magnetische Wechselfeld eine hohe magnetische Dichte, z. B. ein Wechselfeld von 300 kHz, von einem einstellbaren Generator (50 kHz bis 400 kHz) erzeugt wird. Mit dieser Wechselspannung wird der Induktor, welcher ein Flächenwandler oder eine Ringspule sein kann, von einem Oszillator beaufschlagt. Zugleich durchfließen den Induktor hohe elektrische Ströme für sehr kurze Zeit, so dass die Feder durch das hohe Wechselfeld zum Glühen gebracht wird. Dies kann allerdings zur Veränderung der Federcharakteristik führen. Deshalb wird während des Aufwärmungsvorgangs die die Hülse oder den Stift überstehende Feder durch eine magnetische Abschirmung gewissermaßen kalt gehalten. Lediglich der Bereich, der in die Hülse eintritt oder auf den Stift aufgeschoben ist, erwärmt sich und führt zum Schmelzen des den Befestigungsbereich umgebenden Kunststoffes, der sich um die einzelnen Wendeln legt.

Auch wenn ein Wandler mit einem Druckkopf seitlich oder stirnseitig an die Kuppe der Hülse oder des Stiftes angelegt wird, wird dieses Ziel erreicht. Eine Optimierung der Erwärmung kann dadurch erreicht werden, dass die Wendeln des Befestigungsabschnitts dicht an dicht gewickelt werden, also die Wendeln ein geringeres Steigungsmaß aufweisen als der überstehende Federbereich. Durch das gewissermaßen Anglühen des Befestigungsbereiches ist zudem der Vorteil gegeben, dass ein weicherer Übergang zu den aus Federmetall, z. B. Federstahl oder Federbronze, bestehenden Federwendeln gegeben ist, so dass die Feder auch bei hohen mechanischen Wechselbelastungen weitestgehend gegen Bruch an der Übergangsstelle gesichert ist. Wenn die Feder bis zur Innenseite der Kuppe der Hülse gereicht oder an einem Ringflansch der Kuppe des Stiftes anliegt, wird das Ende der Feder stirnseitig zusätzlich eingebettet.

Bei Verwendung einer Feder in Verbindung mit einer Hülse kann zudem der Befestigungsteil konisch gewickelt sein. Auch hat sich als vorteilhaft erwiesen, Längsrippen auf den verbindenden Stiftteil oder Längsrippen in der Hülse an der Innenfläche verteilt, drei Längsrippen um 120° versetzt, anzubringen, um zu erreichen, dass diese partiell vorstehenden Kunststoffteile schneller schmelzen und eine sichere Verbindung herstellen, ohne dass eine großflächige Verbindung gegeben sein muss. Die Schmelzzeit bei einer Feder mit 1-, 2- oder 3-mm Durchmesser kann bei einem Strom von 12,5 bis 25 A und 24 V auf nahezu 3 Sekunden reduziert werden. Diese Erwärmungsphase reicht völlig aus, um das Material der Rippen schmelzen und in die Lücken der Wendeln eintreten lassen zu können. Die Spulen des Induktors können sodann wieder gekühlt werden. Zu diesem Zweck bestehen die Spulen aus Kupferhohlprofilen, durch die Kühlwasser nach dem Schweißen hindurchgeleitet wird.

Bei allen Ausführungen ist durch die Dimensionierung ein kaltes Einführen der Feder in die Hülse oder Überstülpen der Feder auf den Stift möglich. Erst durch den Induktionsschweißvorgang selbst wird erreicht, dass über die Feder das Kunststoffmaterial im Anlagebereich zum Schmelzen gebracht wird und sich der Kunststoff an die erwärmte Feder anlegt, so dass eine sichere Verbindung gegeben ist.

Bei einer anderen Ausführung ist vorgesehen, dass in die Hülse ein Wendelgang eingearbeitet ist, der in der Steigung der Feder im Befestigungsbereich angepasst ist. Dadurch ist es möglich, die Feder, die dicht an der Innenwand anliegt, durch Drehen mittels der Zuführvorrichtung hineinzuschrauben und dann in gewünschter Weise den Induktionsschweißgang auszuführen, so dass zum einen die Feder mechanisch durch das Einschrauben gesichert ist und zum anderen durch das Umschließen des Federdrahtes durch die Kunststoffmasse.

Grundsätzlich lässt sich das Verfahren für verschieden dimensionierte Federn verwenden. Diese können beispielsweise Durchmesser von 1, 2, 3, 4, 5 oder 6 mm aufweisen. Es versteht sich dabei von selbst, dass die Aufnahmen für die Hülsen oder die Stifte in der Vorrichtung entsprechend zu dimensionieren sind. Auch empfiehlt es sich, angepasste Induktoren zum Einsatz zu bringen. Die Aufnahme und der Induktor können als eine Einheit ausgebildet sein, die als Wechselsatz in die Vorrichtung eingesetzt wird.

Je nachdem, was für ein Induktor oder Wandler zum Einsatz kommt, können die Vorrichtungen verschiedene Grundaufbauten aufweisen. Dies hängt von der Ausbildung des Induktors ab. Wird als Induktor eine einfache Zylinderspule mit ein oder zwei Wendeln verwendet, so kann die Aufnahme mit dem Induktor eine kleine Anschlusseinheit bilden, die von unten in die Vorrichtung eingesetzt und durch Schrauben gesichert wird. Von oben kann dann die Hülse oder der Stift in die Aufnahme über einen Zuführkanal, der vorzugsweise eine Abschirmung aus ferromagnetischem Material aufweist und hülsenförmig ausgebildet ist, eingeführt werden. Die Zuführeinrichtung hält die Feder am oberen Ende fest und definiert hierüber die Länge der aus der Hülse vorstehenden Feder bzw. den den Stift überstehenden Teil. Bei kaltem Einsatz der Feder wird der Boden der unten geschlossenen Hülse oder der Ringflansch des Stiftes nicht berührt und damit kein Druck auf die Feder ausgeübt.

Nach dem Induktionsschweißvorgang und der Abkühlphase, die ebenfalls nur im Sekundenbereich liegt, kann die Feder dann mit der angeschweißten Hülse oder dem Stift entnommen werden. Auch dies bewerkstelligt die Zuführvorrichtung, der nach der Entnahme eine neue Feder zur Verbindung zugeführt wird. Die Zuführung der Hülse kann ebenfalls von oben durch die ferromagnetische Hülse erfolgen. Die Vorrichtung kann aber auch aus zwei Vertikalhälften bestehen, die auseinanderfahrbar angeordnet sind. Die Abschirmung ist dann geteilt und wirkt im zusammengefahrenen Zustand gleichermaßen, wie zuvor beschrieben, so dass nur der Befestigungsabschnitt der Feder durch das wechselmagnetische Feld des Induktors erwärmt wird. Dieses ist auch dann erreichbar, wenn anstelle einer Ringspule ein Wandler mit Kopf verwendet wird, bei dem durch Ausbildung des Wandlers das magnetische Wechselfeld im Wesentlichen in Längsrichtung des zylindrischen Wandlers nach vorne verläuft und der Kopf seitlich gegen die Hülse oder gegen den Aufnahmestift gefahren wird.

Bei derartigen Federhülsen oder Federstiften wird die Schraubenfeder bei der Herstellung nicht belastet, wodurch die Schraubenfedern keine Änderung ihrer Federcharakteristik erfahren. Zudem ändert sich die Länge der Schraubenfeder nicht, d.h. die Länge der Schraubenfeder oder der Schraubenfederabschnitt, welche(r) aus der Hülse hervorsteht oder von dem Stift absteht. Die erfindungsgemäßen Federhülsen oder Federstifte sind daher dafür geeignet, in großen Stückzahlen hergestellt zu werden, wobei diese stets gleiche Eigenschaften aufweisen (abstehende Federlänge, Federcharakteristik).

Die Verwendung von Kunststoff für die Hülse oder den Stift und die Verbindung der Hülse oder des Stiftes mit der Schraubenfeder mittels Induktionsschweißen bietet auch den Vorteil einer einfach und schnell herzustellenden Federhülse bzw. Federstiftes. Derartige Federhülsen oder Federstifte können beispielsweise in elektrischen Schaltern Verwendung finden, wobei die Verwendung von Kunststoff für die Hülse oder den Stift aufgrund der isolierenden Eigenschaft von Kunststoff zusätzliche Vorteile bietet. Selbstverständlich können der Stift oder die Hülse nachträglich auch mit einer metallischen Schicht überzogen werden, wenn beispielsweise leitende Eigenschaften gewünscht sind. Die Federhülsen und Federstifte können aber auch in einer Vielzahl von Einrichtungen Verwendung finden und sind nicht auf die Verwendung bei elektrischen Schaltern begrenzt.

Dabei können die Hülse oder der Stift mindestens partiell durch das Induktionsschweißen mit der Schraubenfeder verbunden sein. Weiter kann ein Teil oder können Teile der Schraubenfeder in den Bereichen, in welchen die Schraubenfeder in die Hülse gesteckt ist oder in welchen der Stift in die Schraubenfeder eingesteckt ist, von dem Kunststoff der Hülse oder des Stiftes vollständig durch das Induktionsschweißen umgeben sein. Entscheidend ist hierbei, dass der Kunststoff während des Induktionsschweißens sich zumindest an dem Teil oder den Teilen der Schraubenfeder anlegt und diese mit der Hülse oder dem Stift verbindet. "Fließt" der Kunststoff hingegen um den Teil oder die Teile der Schraubenfeder herum, so ist die Schraubenfeder besonders sicher in der Hülse aufgenommen oder an dem Stift befestigt.

Dabei kann an jedem der Enden der Schraubenfeder eine Hülse mit einem geschlossenen Kopf aufgesteckt oder je ein Stift eingesteckt oder an einem Ende der Schraubenfeder eine Hülse mit einem geschlossenen Kopf aufgesteckt und an einem anderen Ende ein Stift eingesteckt sein. Es ergeben sich dabei eine Vielzahl von Gestaltungsmöglichkeiten. Auch kann die Schraubenfeder unterschiedlich lang sein und verschiedene Durchmesser bzw. Querschnitte aufweisen. Dabei weisen die Hülse und/oder der Stift entsprechende Maße auf.

Die Hülse und/oder der Stift können im Wesentlichen einen runden, rechteckigen, quadratischen oder elliptischen Querschnitt aufweisen. Je nach Querschnitt der Hülse oder des Stiftes ergeben sich verschiedene Verbindungsbereiche, in welchen die Schraubenfeder an der Hülse oder dem Stift anliegt. Daher kann beispielsweise bei einem quadratischen Querschnitt der Hülse die Schraubenfeder, welche einen runden Querschnitt aufweist, mit der Hülse an vier Bereichen befestigt sein, welche axial zu der Schraubenfeder verlaufen.

Die Hülse und/oder der Stift können vorgefertigt im Spritzgießverfahren hergestellte Kunststoffteile sein. Die Federn können aus Federstahl oder Federbronze gefertigt sein. Die Legierungen und das Steigungsmaß der Wendeln der Schraubenfeder sowie deren Größe richtet sich nach den Anforderung. Sie sind dann entsprechend zu dimensionieren. Dies gilt auch für die Hülse oder den Stift.

Als Kunststoff für die Hülse und/oder den Stift können alle thermoplastischen Kunststoffe verwendet werden, welche für die gewünschte Form und den gewünschten Verwendungszweck der Federhülse oder des Federstifts entsprechende Eigenschaften aufweisen. Ebenso können der Kunststoff der Hülse und/oder des Stifts entsprechend dem Induktionsschweißverfahren/-prozess ausgewählt und/oder das Induktionsschweißverfahren/-prozess an die verwendeten thermoplastischen Kunststoffe angepasst sein.

Weitere Vorteile und Merkmale sowie Ausgestaltungen der Erfindung ergeben sich aus den in den Zeichnungen dargestellten Figuren, welche exemplarisch verschiedene Ausführungsformen der Erfindung zeigen. Die dargestellten Ausführungsformen und Maßstäbe sind dabei nicht einschränkend zu verstehen und dienen lediglich zur Darstellung der Erfindung.

In den Zeichnungen zeigen:
- FIG 1a-d: eine Federhülse in verschiedenen Ansichten;
- FIG 2a-d: einen Federstift in verschiedenen Ansichten; und
- FIG 3a und b: eine vergrößerte Darstellung von Verbindungsbereichen.

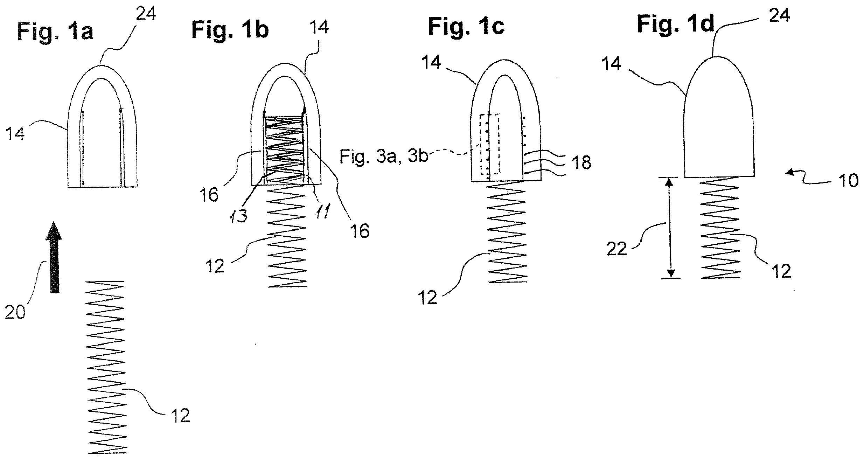

FIG 1a zeigt eine Hülse 14 mit geschlossenem Kopf 24 im Schnitt und eine Schraubenfeder 12, die, wie durch den Pfeil 20 angedeutet, in die Hülse 14 eingesetzt wird. Die Hülse 14 besteht aus thermoplastischem Kunststoff und die Schraubenfeder 12 ist eine Metallfeder.

FIG 1b zeigt den Zustand, in welchem die Schraubenfeder 12 in die Hülse 14 eingesetzt ist, im Schnitt. An der Innenfläche sind um 120° versetzt drei Rippen 11 aus der Mantelwand vorstehend angeformt, die den Befestigungsabschnitt 13 der Schraubenfeder 12 aufnehmen. Die Schraubenfeder 12 ist dabei mit Gleitsitz in die Hülse 14 eingesetzt, wobei Teile der Schraubenfeder 12 an Bereichen 16, insbesondere den Rippen, der Hülse 14 anliegen oder nahezu anliegen, d.h. nur einen geringen Abstand zu der Hülse 14 aufweisen. Die Schraubenfeder 12 wird soweit in die Hülse 14 eingesetzt, dass sie nicht an den sich verjüngenden Bereichen der Hülse 14 anliegt. Dadurch befindet sich die Schraubenfeder 12 bei dem anschließenden Induktionsschweißen in einem unbelasteten Zustand und wird ohne Spannungen oder Druck mit der Hülse 14 verbunden. Dies gewährleistet eine gleichbleibende Federcharakteristik der Schraubenfeder 12 vor und nach dem Verbinden mit der Hülse 14.

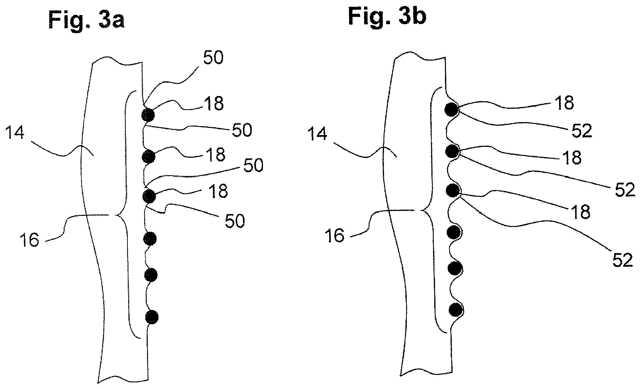

FIG 1c zeigt eine weitere Schnittansicht durch eine Hülse 14, wobei die Schraubenfeder 12 mit der Hülse 14 verbunden ist. Dabei sind die mit 18 bezeichneten Federabschnitte von dem Kunststoff der Hülse 14 umschlossen, so dass die Schraubenfeder 12 fest mit der Hülse 14 verbunden ist. Das Verbinden der Schraubenfeder 12 mit der Hülse 14 erfolgt mittels Induktionsschweißen, wobei die magnetischen Wechselfelder von einem Induktor in die Feder 12 geleitet werden und diese erwärmt wird. Der Induktor ist Bestandteil eines Wandlers oder als die Aufnahme für die Hülse oder den Stift umschließende Spule ausgebildet und wird von einem Generator mit Strom versorgt. Nach dem Einbringen der magnetischen Wechselfelder kühlen die Bereiche 16 ab, wodurch eine feste Verbindung der Schraubenfeder 12 mit der Hülse 14 erreicht wird. Die Verbindung zwischen der Schraubenfeder 12 und der Hülse 14 ist in den FIG 3a und 3b genauer dargestellt und wird mit Bezug auf die FIG. 3a und 3b detaillierter beschrieben.

Dabei erfolgt während des Induktionsschweißens nicht zwangsläufig, wie in FIG 1c dargestellt, eine Erweiterung der Hülse 14 in Richtung der eingesetzten Schraubenfeder 12, wobei diese Darstellung nur zum Veranschaulichen der Erfindung dient. Ebenso kann das Material der Rippen 11 die Wendeln der Feder einbinden.

FIG 1d zeigt eine Federhülse 10. Dabei ist die Schraubenfeder 12 in die Hülse 14 mit dem geschlossenen Kopf 24 eingesetzt und fest mit der Hülse 14 verbunden. Aus der Federhülse 10 steht die Schraubenfeder 12 mit einer vorbestimmbaren definierten Länge 22 hervor.

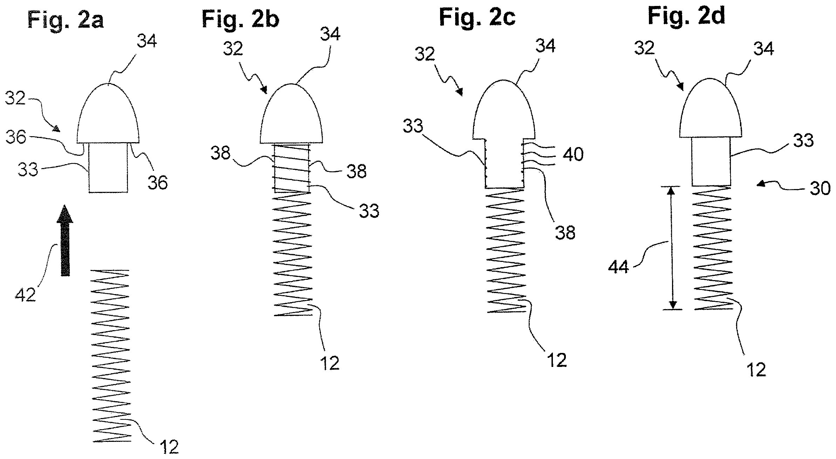

FIG 2a zeigt einen Stift 32, der einen Kopf 34 und einen Stiftschaft 33 aufweist. Der Kopf 34 weist dabei einen größeren Durchmesser als der Stiftschaft 33 auf. Dadurch hat der Stift 32 eine umlaufende Unterseite 36, wodurch der Stift 32 im eingesetzten Zustand die Schraubenfeder 12 überstehen kann (siehe FIG 2b). Auf den Stiftschaft 33 des Stiftes 32 wird, wie durch den Pfeil 42 angedeutet, eine Schraubenfeder 12 aufgesetzt bzw. aufgeschoben. Der Stift 32 besteht aus Kunststoff und die Schraubenfeder 12 ist eine Metallfeder.

FIG 2b zeigt den Zustand, in welchem der Stiftschaft 33 von der Schraubenfeder 12 umgeben ist. Die Schraubenfeder 12 wird dabei mit Gleitsitz auf den Stiftschaft 33 aufgesetzt. Der Stiftschaft 33 kann auch Rippen in Längsrichtung aufweisen. Die Wendeln der Schraubenfeder 12 liegen in Bereichen 38 aneinander an oder liegen nahezu in den Bereichen 38 aneinander an. Zudem kann die Schraubenfeder 12 bis an die Unterseite 36 des Kopfes 34 auf den Stiftschaft 33 geschoben werden, wobei dies nicht zwingend erforderlich ist. Die Tiefe, mit welcher die Schraubenfeder 12 auf den Stiftschaft 33 geschoben wird, wird durch eine Einführvorrichtung einer Vorrichtung zur Herstellung eines Federstiftes 30 (in den FIG nicht dargestellt) bestimmt und nicht durch den Kopf 34 oder die Unterseite 36 des Kopfes 34 definiert oder begrenzt.

Dadurch, dass die Schraubenfeder 12 nicht an der Unterseite 36 des Kopfes 34 anliegen muss, ist ein weiterer Vorteil gegenüber anderen bekannten Ausführungen gegeben. Beispielsweise kann bei einem Aufsetzen mittels Druck und eventuell zusätzlichem Aufschmelzen des Kunststoffes des Stiftes 32 die Schraubenfeder 12 über die Unterseite 36 hinaus in den Kopf 34 eingebracht werden. Dabei ergeben sich unterschiedlich lange Federabschnitte, die von dem Stift 32 abstehen. Gleiches gilt für ein Einsetzen von Schraubenfedern 12 in einen flüssigen Kunststoff, da sich beispielsweise die Schraubenfeder 12 während des Abkühlens des Kunststoffes bewegen kann und dadurch die Position bzw. Lage ändert. Ebenso kann dabei die Federcharakteristik der Schraubenfeder 12 geändert werden, wenn beispielsweise die Schraubenfeder 12 unter Spannung in dem Kunststoff aufgenommen ist oder von dem Kunststoff umspritzt wird. Dies wird durch das erfindungsgemäße Induktionsschweißen vermieden.

FIG 2c zeigt den Zustand, in welchem der Stift 32 fest mit der Schraubenfeder 12 verbunden ist. Die Verbindung der Schraubenfeder 12 mit dem Stift 32 in den Bereichen 38 des Stiftschaftes 33 erfolgt dabei mittels Induktionsschweißen. Dazu ist der Stift 32 in eine Aufnahme einer Vorrichtung zum Herstellen eines Federstiftes 30 aufgenommen und die Schraubenfeder 12 wird über eine Einführvorrichtung der Vorrichtung zum Herstellen eines Federstiftes 30 in Position gehalten. Über einen Wandler werden magnetische Wechselfelder (z. B. 250 kHz) in die Feder 12 auf dem Stift 32 eingebracht. Die Wechselfelder bewirken ein Erwärmen der Feder 12 in den Bereichen 38 bzw. ein Schmelzen/Aufschmelzen des Kunststoffes des Stiftes 32 in den Bereichen 38, so dass Federabschnitte 40 von dem Kunststoff des Stiftes 32, genauer gesagt des Stiftschaftes 33, umschlossen werden oder dass zumindest der Kunststoff des Stiftschaftes 33 mit den Federabschnitten 40 verbunden wird. Nach dem Verschweißen werden die Bereiche 38 abgekühlt, wodurch eine feste Verbindung der Schraubenfeder 12 mit dem Stift 32 bzw. Stiftschaft 33 erreicht wird. Der Kühlprozess wird durch Einleiten von Kühlwasser in den Induktor beschleunigt. Dabei erfolgt das Verbinden der Schraubenfeder 12 mit dem Stift 32 in den Bereichen 38 entsprechend wie für die Federhülse 10 (FIG 1a-d) beschrieben und in den FIG 3a, 3b ausführlicher gezeigt.

FIG 2d zeigt einen Federstift 30, wobei die Schraubenfeder 12 fest mit dem Stiftschaft 33 des Stiftes 32 verbunden ist. Dabei steht die Schraubenfeder 12 mit einer vorher definierbaren Länge 44 von dem Stift 32 bzw. dem Stiftschaft 33 ab.

FIG 3a zeigt einen teilweisen Schnitt durch einen Teil der Hülse 14 einer Federhülse 10. Die Hülse 14 ist in dem Bereich 16 mit einer Schraubenfeder 12 verbunden, wobei sich der Kunststoff der Hülse 14 in den Verbindungsbereichen 50 an den Federabschnitten 18 anlegt.

FIG 3b zeigt eine ähnliche Verbindung einer Schraubenfeder 12 in Federabschnitten 18 und einen Bereich einer Hülse 14. Dabei sind die Federabschnitte 18 vollständig von dem Kunststoff der Hülse 14 in den Verbindungsbereichen 52 umgeben.

Natürlich kann eine Verbindung der Schraubenfeder 12 mit dem Kunststoff einer Hülse 14 oder auch eines Stiftes 32 derart erfolgen, dass die Federabschnitte 18, 40 einer Schraubenfeder 12 Verbindungsbereiche 50 (FIG 3a) und Verbindungsbereiche 52 (FIG 3b) aufweisen. Darüber hinaus ist es auch möglich, dass einzelne Federabschnitte 18, 40 nicht mit der Hülse 14 bzw. dem Kunststoff der Hülse 14 verbunden sind. Für eine dauerhafte und/oder feste Verbindung der Schraubenfeder 12 bzw. Federabschnitte 18, 40 mit einer Hülse 14 oder einem Stift 32 bzw. mit dem Kunststoff der Hülse 14 oder des Stifts 32 ist es ausreichend, wenn nur ein Teil der Schraubenfeder 12 bzw. Federabschnitte 18, 40 mit der Hülse 14 oder dem Stift 32 verbunden sind. Die in den FIG. mit 18 und 40 bezeichneten Federabschnitte sind als Schnitt durch die einzelnen Wendeln der Schraubenfeder 12 dargestellt. Es ist aber offensichtlich, dass dabei auch der gesamte Teil der Schraubenfeder 12 gemeint ist, welcher in/an den Bereichen 16, 38 anliegt bzw. mit der Hülse 14 oder mit dem Stift 32 verbunden wird/ist, bzw. der in die Hülse 14 eingesetzt wird/ist oder auf den Stift 32 (Stiftschaft 33) aufgeschoben/aufgesetzt wird/ist. Dies gilt für alle gezeigten und beschriebenen Ausführungen.

Jedoch kann über den Wandler (nicht dargestellt) bzw. über die Frequenz und der Energiedichte des Induktors und die Dauer der Beaufschlagung einer Hülse 14 bzw. eines Stiftes 32 mit den magnetischen Wechselfeldern bestimmt werden, wie sehr bzw. wie stark eine Schraubenfeder 12 erhitzt und mit einer Hülse 14 oder einem Stift 32 verbunden wird.

Ein Wandler für das Induktionsschweißen einer Vorrichtung zur Herstellung einer Federhülse 10 oder eines Federstifts 30 kann verschiedenartig ausgestaltet sein.

Beispielsweise kann der Wandler einen stiftartigen Abschnitt aufweisen, welcher an einer Hülse 14 oder einem Stift 32 seitlich anliegt. Alternativ dazu kann der Wandler so ausgestaltet sein, dass er eine Hülse 14 oder einen Stift 32 umgibt.

Der Wandler liegt in dem vorstehend erstgenannten Beispiel seitlich an der Hülse 14 oder dem Stift 32 auf Höhe der Bereiche 16 oder über dem Bereich 38 oder stirnseitlich der Kuppe des Kopfes 24 an. Wenn der Wandler auf bzw. an dem Kopf 24, 34 an- bzw. aufliegen kann die Aufnahme unmittelbar darüber enden. In dem vorstehend als zweiten genannten Beispiel umgreift der Wandler die Hülse 14 auf Höhe der Bereiche 16. Entsprechend kann der Wandler auch den Stift 32 über dem Bereich 38 umgreifen.

Die vorstehend beschriebenen Ausführungen von Wandlern haben nur beispielhaften Charakter und sind nicht dazu vorgesehen, die für die vorliegende Erfindung verwendbaren Wandlertypen zu beschränken. Ein Wandler kann auch andere Formen aufweisen und an anderen Stellen auf eine Hülse 14 oder einen Stift 32 magnetische Wechselfelder in den Befestigungsabschnitt der Feder 12 leiten, damit dieser Abschnitt so heiß wird, dass der Kunststoff schmilzt und anhaftet.

Die Vorrichtung umfasst die Aufnahme für die Hülse 14 oder den Stift 32, die Einführvorrichtung für die Schraubenfeder 12, den Wandler zur Erregung des hochfrequenten magnetischen Wechselfeldes und eine hohe Energiedichte der Zeitsteuerung des Generators. Der Hochfrequenzgenerator erzeugt die magnetischen Wechselfelder bei einer durchschnittlichen Nennleistung, die zwischen einigen hundert und über tausend Watt liegen kann.

Über die Zeitsteuerung können zudem die Schweißzeit und die Haltezeit gesteuert werden. Die Schweißzeit bestimmt den Zeitraum, in welchem magnetische Wechselfelder in die Feder eingebracht werden, und die Haltezeit bestimmt den Zeitraum, in welchem die miteinander verbundenen Teile nach dem Induktionsschweißen noch in Position gehalten werden.

Die Vorrichtung zur Herstellung von Federhülsen 10 oder Federstiften 30 weist natürlich weitere Bestandteile auf, auf die nicht näher eingegangen wird. Zudem ist es für einen Fachmann aus der Beschreibung ersichtlich, wie eine entsprechende Vorrichtung aufzubauen, zu bedienen und zu steuern ist, um anhand der in der Erfindung dargelegten Informationen erfindungsgemäße Federhülsen 10 und/oder Federstifte 30 herstellen zu können. Auch können die vorstehend beschriebenen Teile der Vorrichtung zur Herstellung von Federhülsen 10 und/oder Federstiften 30 durch andere entsprechende Teile/Vorrichtungen ersetzt werden.

### Bezugszeichenliste

- 10: Federhülse
- 11: Rippe
- 12: Schraubenfeder
- 13: blockförmiger Befestigungsabschnitt
- 14: Hülse
- 16: Bereich
- 18: Federabschnitt
- 20: Richtung
- 22: Länge
- 24: Kopf
- 30: Federstift
- 32: Stift
- 33: Stiftschaft
- 34: Kopf
- 36: Unterseite
- 38: Bereich
- 40: Federabschnitt
- 42: Richtung
- 44: Länge
- 50: Verbindungsbereich
- 52: Verbindungsbereich

## Patentansprüche

1. Federhülse (10) oder Federstift (30), bestehend aus einer Schraubenfeder (12) und mindestens einer an einem Ende der Schraubenfeder (12) aufgesteckten Hülse (14) mit einem geschlossenen Kopf (24), wobei die Schraubenfeder (12) aus der Hülse (14) hervorsteht, oder mindestens einem an einem Ende der Schraubenfeder (12) eingesteckten Stift (32) mit einem Kopf (34), wobei der Kopf (34) des Stifts (32) die Schraubenfeder (12) übersteht, **dadurch gekennzeichnet, dass** die Schraubenfeder (12) eine Metallfeder ist, dass die Hülse (14) oder der Stift (32) aus Kunststoff bestehen und die Schraubenfeder (12) durch Induktionsschweißen mit der Hülse (14) oder dem Stift (32) mindestens partiell verbunden ist.

2. Federhülse (10) oder Federstift (30) nach Anspruch 1, **dadurch gekennzeichnet, dass** die Wendeln der Schraubenfeder (12) über die Länge des Eintauchbereiches in die Hülse (14) oder Überstülpbereiches auf den Stift (32) ein geringeres Steigungsmaß aufweisen als über den überstehenden Schraubenfederbereich.

3. Federhülse (10) oder Federstift (30) nach Anspruch 2, **dadurch gekennzeichnet, dass** die Wendeln der Schraubenfeder (12) im Befestigungsabschnitt (13) blockartig aneinander liegen.

4. Federhülse (10) oder Federstift (30) nach einem der vorhergehenden Ansprüche, dadurch gekennzeichne t, dass die Hülse (14) mindestens eine in Längsrichtung verlaufende Rippe an der Innenwandung aufweist, die an der Schraubenfeder (12) im eingesetzten Zustand anliegt und die Schraubenfeder (12) durch Induktionsschweißen mindestens in diesem Bereich in der Hülse (14) gehalten ist.

5. Federhülse (10) oder Federstift (30) nach einem der Ansprüche 1 bis 3, **dadurch gekennzeichnet, dass** in die Hülse (14) oder auf den Stift (32) eine Gewindestruktur im Steigungsmaß der Schraubenfeder (12) im Befestigungsabschnitt eingebracht ist und die Schraubenfeder (12) mit dem Befestigungsabschnitt ein- bzw. aufgebracht ist.

6. Federhülse (10) oder Federstift (30) nach einem der vorhergehenden Ansprüche, **dadurch gekennzeichnet, dass** die Hülse (14) im Wesentlichen einen runden, rechteckigen, quadratischen oder elliptischen Querschnitt und/oder der Stift (32) im Wesentlichen einen runden, rechteckigen, quadratischen oder elliptischen Querschnitt aufweisen.

7. Verfahren zum Herstellen einer Federhülse (10) oder eines Federstifts (30) nach einem Ansprüche 1 bis 6, bestehend aus einer Schraubenfeder (12) und mindestens einer an einem Ende der Schraubenfeder (12) aufgesteckten Hülse (14) mit einem geschlossenen Kopf (24), wobei die Schraubenfeder (12) aus der Hülse (14) hervorsteht, oder mindestens einem an einem Ende der Schraubenfeder (12) eingesteckten Stift (32) mit einem Kopf (34), wobei der Kopf (34) des Stifts (32) die Schraubenfeder (12) übersteht, **dadurch gekennzeichnet, dass** die Schraubenfeder (12) mit der mindestens einen Hülse (14) oder mit dem mindestens einen Stift (32) durch Induktionsschweißen verbunden ist, wobei die Schraubenfeder (12) eine Metallfeder ist, und ein Wandler zur Erzeugung elektromagnetischer Wellen von einem Generator mit mittelfrequenter Wechselspannung beaufschlagt wird, welcher Wandler seitlich an der Hülse (14) oder seitlich an dem Stift (32) oder stirnseitig an der Kuppe des Kopfes (24) der Hülse (14) oder des Stiftes (32) während des Induktionsschweißens liegt, wobei durch das magnetische Wechselfeld in der Feder ein Induktionsstrom erzeugt wird, der die Feder erwärmt und die umgebende Kunststoffmasse zum Schmelzen bringt.

8. Verfahren nach Anspruch 7 , **dadurch gekennzeichnet, dass** die die Hülse (14) oder den Stift (32) überstehende Schraubenfeder (12) mindestens während des Induktionsschweißens durch einen Abschirmungskörper magnetisch abgeschirmt wird.

9. Verfahren nach Anspruch 7, **dadurch gekennzeichnet, dass** die Schraubenfeder (12) mit dem einzuschweißenden Ende im kalten Zustand in die Hülse (14) eingeführt oder auf den Stift (32) lose aufgesetzt oder in ein vorgesehenes Gewinde eingeschraubt wird und dass die überstehende Höhe dabei eingestellt wird.

10. Vorrichtung zur Herstellung einer Federhülse (10) oder eines Federstifts (30) nach einem Ansprüche 1 bis 6, bestehend aus einer Schraubenfeder (12) und mindestens einer an einem Ende der Schraubenfeder (12) aufgesteckten Hülse (14) mit einem geschlossenen Kopf (24), wobei die Schraubenfeder (12) aus der Hülse (14) hervorsteht, oder mindestens einem an einem Ende der Schraubenfeder (12) eingesteckten Stift (32) mit einem Kopf (34), wobei der Kopf (34) des Stifts (32) die Schraubenfeder (12) übersteht, **dadurch gekennzeichnet, dass** die Vorrichtung eine Aufnahme für die Hülse (14) oder den Stift (32) aufweist, dass darüber eine Einführvorrichtung für die Schraubenfeder (12) vorgesehen ist, mit der die Aufsetztiefe auf den Stift (32) oder die Einsetztiefe der Schraubenfeder (12) in die Hülse (14) einstellbar ist, dass das über die Hülse (14) oder den Stift (32) überstehende Ende der Schraubenfeder (12) in eine hülsenförmige oder aus zwei Halbschalen gebildete magnetische Abschirmung während des Schweißvorgangs eingebracht ist und dass als Induktor ein Wandler mit einem ein magnetisches Wechselfeld abgebenden Kopf an der Hülse (14) oder dem Stift (32) seitlich oder stirnseitig aufliegt oder in einer solchen Position zu der Aufnahme fest in der Vorrichtung angeordnet ist.

11. Vorrichtung zur Herstellung einer Federhülse (10) oder eines Federstifts (30) nach einem Ansprüche 1 bis 6, bestehend aus einer Schraubenfeder (12) und mindestens einer an einem Ende der Schraubenfeder (12) aufgesteckten Hülse (14) mit einem geschlossenen Kopf (24), wobei die Schraubenfeder (12) aus der Hülse (14) hervorsteht, oder mindestens einem an einem Ende der Schraubenfeder (12) eingesteckten Stift (32) mit einem Kopf (34), wobei der Kopf (34) des Stifts (32) die Schraubenfeder (12) übersteht, **dadurch gekennzeichnet, dass** die Vorrichtung eine Aufnahme für die Hülse (14) oder den Stift (32) aufweist, dass darüber eine Einführvorrichtung für die Schraubenfeder (12) vorgesehen ist, mit der die Aufsetztiefe auf den Stift (32) oder die Einsetztiefe der Schraubenfeder (12) in die Hülse (14) einstellbar ist, dass das über die Hülse (14) oder den Stift (32) überstehende Ende der Schraubenfeder (12) in eine hülsenförmige oder aus zwei Halbschalen gebildete magnetische Abschirmung während des Schweißvorgangs eingebracht ist und dass als Induktor eine Induktionsspule um die Aufnahme angeordnet ist, die mit einem Generator verbunden ist und über eine Steuerung während des Induktionsschweißens von einem Strom durchflossen wird.

## Claims

1. Spring sleeve (10) or spring pin (30), consisting of a helical spring (12) and at least one sleeve (14), which is plugged onto one end of the helical spring (12), with a closed head (24), wherein the helical spring (12) protrudes from the sleeve (14), or at least one pin (32), which is inserted into one end of the helical spring (12), with a head (34), wherein the head (34) of the pin (32) projects beyond the helical spring (12), **characterised in that** the helical spring (12) is a metal spring, that the sleeve (14) or the pin (32) consists of plastics material and that the helical spring (12) is at least partly connected with the sleeve (14) or the pin (32) by induction welding.

2. Spring sleeve (10) or spring pin (30) according to claim 1, **characterised in that** the coils of the helical spring (12) have over the length of the region of penetration into the sleeve (14) or region of engagement over the pin (32) a smaller pitch dimension than over the remaining region of the helical spring.

3. Spring sleeve (10) or spring pin (30) according to claim 2, **characterised in that** the coils of the helical spring (12) bear against one another in block-like manner in the securing section (13).

4. Spring sleeve (10) or spring pin (30) according to any one of the preceding claims, **characterised in that** the sleeve (14) has at the inner wall at least one rib which extends in longitudinal direction and which bears against the helical spring (12) in the inserted state and the helical spring (12) is held in the sleeve (14) at least in this region by induction welding.

5. Spring sleeve (10) or spring pin (30) according to any one of claims 1 to 3, **characterised in that** a thread structure is formed in the sleeve (14) or on the pin (32) in the pitch dimension of the helical spring (12) in the securing section and the helical spring (12) is fitted in or fitted on by the securing section.

6. Spring sleeve (10) or spring pin (30) according to any one of the preceding claims, **characterised in that** the sleeve (14) has a substantially round, rectangular, square or elliptical cross-section and/or the pin (32) has a substantially round, rectangular, square or elliptical cross-section.

7. Method of a producing a spring sleeve (10) or spring pin (30) according to any one of claims 1 to 6, consisting of a helical spring (12) and at least one sleeve (14), which is plugged onto one end of the helical spring (12), with a closed head (24), wherein the helical spring (12) protrudes from the sleeve (14), or at least one pin (32), which is inserted into one end of the helical spring (12), with a head (34), wherein the head (34) of the pin (32) projects beyond the helical spring (12), **characterised in that** the helical spring (12) is connected with the at least one sleeve (14) or with the at least one pin (32) by induction welding, wherein the helical spring (12) is a metal spring, and a converter for generating electromagnetic waves is acted on by a generator with medium-frequency alternating voltage, which converter lies laterally against the sleeve (14) or laterally against the pin (32) or at the end against the crown of the head (24) of the sleeve (14) or of the pin (32) during the induction welding, wherein an induction current which heats the spring and causes the surrounding plastics material mass to melt is produced by the magnetic alternating field in the spring.

8. Method according to claim 7, **characterised in that** the helical spring (12) projecting beyond the sleeve (14) or the pin (32) is magnetically shielded by a shielding body at least during the induction welding.

9. Method according to claim 8, **characterised in that** the helical spring (12) in cold state is, by the end to be welded in place, introduced into the sleeve (14) or loosely placed on the pin (32) or screwed into a provided thread and that the projecting height is **in that** case set.

10. Device for producing a spring sleeve (10) or a spring pin (30) according to any one of claims 1 to 6, consisting of a helical spring (12) and at least one sleeve (14), which is plugged onto one end of the helical spring (12), with a closed head (24), wherein the helical spring (12) protrudes out of the sleeve (14), or at least one pin (32), which is inserted into one end of the helical spring (12), with a head (34), wherein the head (34) of the pin (32) projects beyond the helical spring (12), **characterised in that** the device comprises a mount for the sleeve (14) or the pin (32), that in addition an introducing device for the helical spring (12) is provided, by which device the depth of placing on the pin (32) or the depth of insertion of the helical spring (12) into the sleeve (14) is settable, that the end, which projects beyond the sleeve (14) or the pin (32), of the helical spring (12) is introduced during the welding process into a magnetic shield which is sleeve-shaped or formed from two half shells and that, as inductor, a converter with a head delivering a magnetic alternating field rests laterally or at the end on the sleeve (14) or the pin (32) or is fixedly arranged in the device in such a position with respect to the mount.

11. Device for producing a spring sleeve (10) or a spring pin (30) according to any one of claims 1 to 6, consisting of a helical spring (12) and at least one sleeve (14), which is plugged onto one end of the helical spring (12), with a closed head (24), wherein the helical spring (12) protrudes out of the sleeve (14), or at least one pin (32), which is inserted onto one end of the helical spring (12), with a head (34), wherein the head (34) of the pin (32) projects beyond the helical spring (12), **characterised in that** the device comprises a mount for the sleeve (14) or the pin (32), that in addition an introducing device for the helical spring (12) is provided, by which device the depth of placing on the pin (32) or the depth of insertion of the helical spring (12) into the sleeve (14) is settable, that the end, which projects beyond the sleeve (14) or the pin (32), of the helical spring (12) is introduced during the welding process into a magnetic shield, which is sleeve-shaped or formed from two half shells, and that as inductor an induction coil is used which is arranged around the mount and connected with a generator and which by way of a control conducts current during the induction welding.

## Revendications

1. Douille élastique (10) ou tige à ressort (30), constituée d'un ressort hélicoïdal (12) et d'au moins une douille (14) fixée sur une extrémité du ressort hélicoïdal (12) et pourvue d'une tête (24) fermée, dans laquelle le ressort hélicoïdal (12) fait saillie de la douille (14), ou d'au moins une tige (32) enfichée sur une extrémité du ressort hélicoïdal (12) et pourvue d'une tête (34), dans laquelle la tête (34) de la tige (32) dépasse du ressort hélicoïdal (12), **caractérisée en ce que** le ressort hélicoïdal (12) est un ressort métallique, **en ce que** la douille (14) ou la tige (12) est constituée de matière plastique et le ressort hélicoïdal (12) est relié au moins en partie à la douille (14) ou à la tige (32) par soudage par induction.

2. Douille élastique (10) ou tige à ressort (30) selon la revendication 1, **caractérisée en ce que** les spires du ressort hélicoïdal (12) présentent sur toute la longueur de la zone d'enfoncement dans la douille (14) ou de la zone d'enfilage sur la tige (32) une grandeur de pas plus petite que sur toute l'étendue de la zone du ressort hélicoïdal qui est en dépassement.

3. Douille élastique (10) ou tige à ressort (30) selon la revendication 2, **caractérisée en ce que** les spires du ressort hélicoïdal (12) sont appliquées les unes contre les autres à la façon d'un bloc dans la section de fixation (13).

4. Douille élastique (10) ou tige à ressort (30) selon l'une quelconque des revendications précédentes, **caractérisée en ce que** la douille (14) présente sur la paroi intérieure au moins une nervure s'étendant dans la direction longitudinale, laquelle nervure s'applique , dans l'état inséré, contre le ressort hélicoïdal (12) et le ressort hélicoïdal (12) est retenu dans la douille (14) au moins dans cette zone par soudage par induction.

5. Douille élastique (10) ou tige à ressort (30) selon l'une quelconque des revendications 1 à 3, **caractérisée en ce que**, dans la douille (14) ou sur la tige (32), une structure filetée de la grandeur de pas du ressort hélicoïdal (12) est ménagée dans la section de fixation et le ressort hélicoïdal (12) est introduit ou appliqué au moyen de la section de fixation.

6. Douille élastique (10) ou tige à ressort (30) selon l'une quelconque des revendications précédentes, **caractérisée en ce que** la douille (14) présente sensiblement une section transversale ronde, rectangulaire, carrée ou elliptique et/ou la tige (32) présente sensiblement une section transversale ronde, rectangulaire, carrée ou elliptique.

7. Procédé de fabrication d'une douille élastique (10) ou d'une tige à ressort (30) selon l'une quelconque des revendications 1 à 6, constituée d'un ressort hélicoïdal (12) et d'au moins une douille (14) fixée sur une extrémité du ressort hélicoïdal (12) et pourvue d'une tête (24) fermée, dans lequel le ressort hélicoïdal (12) fait saillie de la douille (14), ou d'au moins une tige (32) enfichée sur une extrémité du ressort hélicoïdal (12) et pourvue d'une tête (34), dans lequel la tête (34) de la tige (32) dépasse du ressort hélicoïdal (12), **caractérisé en ce que** le ressort hélicoïdal (12) est relié à ladite au moins une douille (14) ou à ladite au moins une tige (32) par soudage par induction, dans lequel le ressort hélicoïdal (12) est un ressort métallique, et un convertisseur permettant la génération d'ondes électromagnétiques est soumis à l'effet d'une tension alternative de moyenne fréquence par un générateur, lequel convertisseur se situe latéralement contre la douille (14) ou latéralement contre la tige (32) ou frontalement contre le dôme de la tête (24) de la douille (14) ou de la tige (32) pendant le soudage par induction, dans lequel le champ magnétique alternatif permet de générer dans le ressort un courant d'induction chauffant le ressort et amène la masse de matière plastique entourant ce dernier à fondre.

8. Procédé selon la revendication 7, **caractérisé en ce que** le ressort hélicoïdal (12) dépassant de la douille (14) ou de la tige (32) est protégé magnétiquement par un corps de protection au moins pendant le soudage par induction.

9. Procédé selon la revendication 7, **caractérisé en ce que** le ressort hélicoïdal (12) est introduit à l'état froid dans la douille (14) par l'extrémité à souder ou placé de façon lâche sur la tige (32) ou vissé dans un filet prévu et **en ce que** la hauteur en dépassement est réglée à cette occasion.

10. Dispositif de fabrication d'une douille élastique (10) ou d'une tige à ressort (30) selon l'une quelconque des revendications 1 à 6, constituée d'un ressort hélicoïdal (12) et d'au moins une douille (14) fixée sur une extrémité du ressort hélicoïdal (12) et pourvue d'une tête (24) fermée, dans lequel le ressort hélicoïdal (12) fait saillie de la douille (14), ou d'au moins une tige (32) enfichée sur une extrémité du ressort hélicoïdal (12) et pourvue d'une tête (34), dans lequel la tête (34) de la tige (32) dépasse du ressort hélicoïdal (12), **caractérisé en ce que** le dispositif présente un logement pour la douille (14) ou la tige (32), **en ce qu'**un dispositif d'introduction pour le ressort hélicoïdal (12) est en outre prévu, au moyen duquel la profondeur de mise en place sur la tige (32) ou la profondeur d'insertion du ressort hélicoïdal (12) dans la douille (14) peut être réglée, **en ce que** l'extrémité du ressort hélicoïdal (12) dépassant de la douille (14) ou de la tige (32) est introduite dans une protection magnétique en forme de douille ou formée de deux demi-coques pendant la procédure de soudage et **en ce qu'**un convertisseur pourvu d'une tête délivrant un champ alternatif magnétique repose latéralement ou frontalement en tant qu'inducteur sur la douille (14) ou la tige (32) ou est agencé fixement dans le dispositif dans une position de ce type par rapport au logement.

11. Dispositif de fabrication d'une douille élastique (10) ou d'une tige à ressort (30) selon l'une quelconque des revendications 1 à 6, constituée d'un ressort hélicoïdal (12) et d'au moins une douille (14) fixée sur une extrémité du ressort hélicoïdal (12) et pourvue d'une tête (24) fermée, dans lequel le ressort hélicoïdal (12) dépasse de la douille (14), ou d'au moins une tige (32) enfichée sur une extrémité du ressort hélicoïdal (12) et pourvue d'une tête (34), dans lequel la tête (34) de la tige (32) dépasse du ressort hélicoïdal (12), **caractérisé en ce que** le dispositif présente un logement pour la douille (14) ou la tige (32), **en ce qu'**un dispositif d'introduction pour le ressort hélicoïdal (12) est en outre prévu, au moyen duquel la profondeur de mise en place sur la tige (32) ou la profondeur d'insertion du ressort hélicoïdal (12) dans la douille (14) peut être réglée, **en ce que** l'extrémité du ressort hélicoïdal (12) dépassant de la douille (14) ou de la tige (32) est introduite dans une protection magnétique en forme de douille ou formée de deux demi-coques pendant la procédure de soudage et **en ce qu'**une bobine d'induction est agencée en tant qu'inducteur autour du logement, et est reliée à un générateur et est traversée par un courant par l'intermédiaire d'une commande pendant le soudage par induction.
